# EUROPÄISCHE PATENTANMELDUNG

(11) **EP 3 375 919 A1**
(43) Veröffentlichungstag der Anmeldung: **19.09.2018**
(21) Anmeldenummer: 18156705.8
(22) Anmeldetag: 14.02.2018
(51) Int. Cl.: D01H 4/12, F16C 32/04

(54) **VERFAHREN ZUR LAGERUNG EINES SPINNROTORS SOWIE LAGERUNG, SPINNROTOR UND STÜTZLAGER**

(30) Priorität: 22.02.2017 DE 102017103622
(71) Anmelder: Rieter CZ s.r.o., 562 01 Ústí nad Orlicí (CZ)
(72) Erfinder: Burchert, Mathias, 73760 Ostfildern (DE); Moravec, Milan, 562 01 Usti nad Orlici (CZ); Sloupensky, Jiri, 565 53 Dolni Sloupnice (CZ); Silber, Siegfried, 4202 Kirchschlag (AT); Dirnberger, Peter, 4490 St. Florian (AT); Kübler, Markus, 73312 Geislingen (DE)
(74) Vertreter: Bergmeier, Werner

(57) **Zusammenfassung**

Ein Verfahren zur Lagerung eines einen Topf (3) und eine Welle (4) aufweisenden Spinnrotors (1) einer Offenend-Spinneinrichtung sowie eine entsprechende Lagerung, hat zwei Radiallager (5) und zumindest ein axiales Stützlager (6). Zumindest eines der Radiallager (5) wirkt aktiv magnetisch und der Spinnrotor (1) wird mittels des axialen Stützlagers (6) derart axial abgestützt, dass einerseits ein aerostatisches Luftlager und/oder ein mechanisches Anlaufelement (16) und andererseits ein Magnetlager vorgesehen ist, welche gegeneinander wirken.

## Beschreibung

Die Erfindung betrifft ein Verfahren zur Lagerung eines einen Topf und eine Welle aufweisenden Spinnrotors einer Offenend-Spinneinrichtung, mit zwei Radiallagern und zumindest einem axialen Stützlager sowie eine entsprechende Lagerung, einen Spinnrotor und ein Stützlager für einen Spinnrotor.

Aus der DE 10 2006 053 734 A1 ist ein Rotorantrieb einer Offenend-Spinnvorrichtung bekannt. Der Rotorantrieb treibt eine Welle und einen daran angeordneten Spinnrotor an. Die Welle ist Teil eines Läufers des Rotorantriebs und ist auf beiden Seiten des Rotorantriebs magnetisch gelagert. Die Lagerung erfolgt mittels jeweils zweier Permanentmagnetringe und einer definiert bestrombaren Magnetlagerspule. Mit diesen Elementen und einem induktiven Sensor wird die axiale Position des, im Betrieb frei schwebenden, Spinnrotors geregelt. Auf diese Weise gelingt es zwar die axiale Position der Welle und damit des Spinnrotors relativ genau bestimmen und einhalten zu können. Die radiale Position der Welle und des Spinnrotors bewegt sich dabei allerdings in einer relativ großen Toleranz. Um einen gleichmäßigen und unterbrechungsfreien Faden spinnen zu können, ist allerdings neben der axialen auch die radiale Position des Spinnrotors außerordentlich wichtig.

Aus der WO 93/05310 A1 ist eine radiale Magnetlagerung bekannt. Zwischen Polschenkeln eines Stators, die von einer Spule umgeben sind, ist eine Welle angeordnet. Die Welle wird durch ein magnetisches Feld zwischen den Spulen radial zentriert und gehalten. Die Lagerung und Zentrierung kann mittels eines aktiven Regelungssystems erfolgen.

Aufgabe der vorliegenden Erfindung ist es ein Verfahren zur Lagerung eines Spinnrotors einer Offenend-Spinneinrichtung sowie eine entsprechende Lagerung hierfür, einen Spinnrotor sowie ein Stützlager zu schaffen, welche eine stabile radiale und axiale Abstützung des Spinnrotors erlauben, um bei sehr hohen Geschwindigkeiten, wie beispielsweise 200.000 Umdrehungen/min eingesetzt werden zu können. Die Erfindung muss dabei in der Lage sein, Kräfte, die aus unterschiedlichen Richtungen auf den Spinnrotor einwirken, aufzunehmen und so auszugleichen, dass der Spinnrotor für die Herstellung hochwertigen Garnes geeignet ist.

Die Aufgabe wird gelöst mit einem Verfahren, einer Lagerung, einem Spinnrotor und einem Stützlager mit den Merkmalen der unabhängigen Patentansprüche.

Das erfindungsgemäße Verfahren dient zur Lagerung eines einen Topf und eine Welle aufweisenden Spinnrotors einer Offenend-Spinneinrichtung. Es verwendet zwei Radiallager und zumindest ein axiales Stützlager, mit welchen der Spinnrotor in der Offenend-Spinneinrichtung gelagert ist. Zumindest eines der radialen Lager wirkt aktiv magnetisch. Darüber hinaus wird der Spinnrotor mittels des axialen Stützlagers derart axial abgestützt, dass einerseits ein aerostatisches Luftlager und/oder ein mechanisches Anlaufelement und andererseits ein Magnetlager vorgesehen ist, welche gegeneinander wirken.

Üblicherweise erzeugen aktive magnetische Radiallager bereits axiale Abstützkräfte, so dass ein separates axiales Stützlager in der Regel nicht erforderlich ist. Auf einen Spinnrotor wirken jedoch vielerlei Kräfte, welche bewirken können, dass der Spinnrotor aus seiner vorgesehenen Position bewegt wird. Dies ist sehr nachteilig, da durch eine Veränderung der Position des Topfes des Spinnrotors, in welchem das Garn erzeugt wird, Ungleichmäßigkeiten in dem Garn entstehen können, welche sogar bis zu einem Fadenbruch führen können. Durch die Verwendung eines zusätzlichen axialen Stützlagers wird der Spinnrotor so stark axial abgestützt, dass er die auf ihn einwirkenden axialen Kräfte kompensieren kann. Derartige axiale Kräfte, beispielsweise Druckkräfte, können beim Einspeisen von Fasern in den Rotor entstehen. Andererseits wirken Zugkräfte auf den Spinnrotor, welche z.B. durch eine Saugkraft erzeugt werden, welche in dem Rotorgehäuse, in welchem der Spinnrotor rotiert, anliegt. Das axiale Stützlager, welches einerseits ein aerostatisches Luftlager und/oder ein mechanisches Anlaufelement und andererseits ein Magnetlager ist, welche gegeneinander wirken, kann eine Kombination aus einem Luftlager und einem Magnetlager oder aus einem mechanischen Anlaufelement und einem Magnetlager sein. Es ist auch möglich, dass eine Kombination aus einem Luftlager und einem Magnetlager gewählt wird und ein mechanisches Anlaufelement zusätzlich vorgesehen ist. Je nach Bauweise der Spinnvorrichtung kann es vorteilhafter sein, wenn das axiale Stützlager eher Zugkräfte auf den Spinnrotor ausübt, um Druckkräfte aus dem Spinnprozess zu kompensieren. In einer anderen Bauweise kann es aber auch vorteilhaft sein, dass das axiale Stützlager derart wirkt, dass es Zugkräfte kompensiert und dementsprechend eine Druckkraft auf den Spinnrotor ausübt.

Vorteilhafterweise wirkt das axiale Stützlager zumindest im Spinnbetrieb berührungslos. Durch die berührungslose Lagerung der Welle kann der Spinnrotor energiesparend betrieben werden. Das mechanische Anlaufelement ist vorzugsweise nur während der Anlaufphase, der Abbremsphase oder bei Einwirkung starker äußerer Kräfte in Funktion. Der Hauptzweck ist in diesem Fall die Beschädigung von Bauteilen zu vermeiden.

In einer besonders vorteilhaften Ausführung der Erfindung ist das axiale Stützlager ein aktives, d.h. ein geregeltes Stützlager, welches in der Lage ist sowohl Zug- als auch Druckkräfte zu kompensieren und den Spinnrotor in einer sehr gleichbleibenden Lage zu halten. Ein solches Stützlager sorgt für besonders gute Laufeigenschaften des Spinnrotors und trägt damit auch zu einem besonders guten Spinnergebnis bei. Neben der Hauptfunktion der Lagehaltung des Spinnrotors kann das axiale Stützlager auch dazu benutzt werden, die Position des Spinnrotors in eine oder mehrere weitere Positionen zu verlagern. Der Spinnrotor kann dann axial verschoben zu einer ersten Position betrieben werden. Dies kann hilfreich sein, wenn der Spalt zwischen einem das Rotorgehäuse abdeckenden Deckels und dem Spinnrotor, zum Beispiel für das Vorbereiten des Fadenendes oder zum Reinigen des Rotors, vergrößert werden soll. Nach dieser Spaltvergrößerung kann der Spinnrotor wieder in seine ursprüngliche erste Position zurück bewegt werden. In einer einfacheren Ausführung der Erfindung, die aber vielfach auch ausreichend ist, handelt es sich bei dem Stützlager um ein passives Axiallager.

In einer vorteilhaften Ausführung der Erfindung ist der Spinnrotor am Wellenende und/oder in zumindest einem weiteren Bereich, insbesondere im Bereich des Radiallagers oder des Topfes, axial abgestützt. Dabei erzeugen insbesondere zwei dieser axialen Abstützungen einander entgegen gerichtete Kräfte auf die Welle des Spinnrotors. Hierdurch kann eine besonders steife axiale Lagerung des Spinnrotors erzielt werden, die sowohl Zug- als auch Druckkräften sehr gut widerstehen kann.

Wie bereits geschildert, übt das axiale Stützlager Zug- und/oder Druckkräfte auf die Welle des Spinnrotors aus, um von außen, insbesondere durch den Spinnbetrieb auf die Welle einwirkende Axialkräfte kompensieren zu können.

Vorzugsweise wird der Abstand zwischen dem Stützlager und einem Bezugspunkt auf dem Spinnrotor, insbesondere auf der Welle, gemessen und dahingehend geregelt, dass er möglichst gleich bleibt. Hierdurch wird trotz unterschiedlicher, auf den Spinnrotor einwirkender Kräfte eine vorbestimmte, möglichst gleich bleibende Position des Spinnrotors erhalten.

Eine erfindungsgemäße Lagerung eines einen Topf und eine Welle aufweisenden Spinnrotors einer Offenend-Spinneinrichtung weist zwei Radiallager und zumindest ein axiales Stützlager auf. Erfindungsgemäß wirkt zumindest eines der Radiallager aktiv magnetisch und der Spinnrotor ist mittels des axialen Stützlagers einerseits mit einem aerostatischen Luftlager und/oder einem mechanisches Anlaufelement und andererseits mit einem Magnetlager ausgestattet, welche gegeneinander wirken. Die erfindungsgemäße Lagerung ist damit in der Lage auch größere, insbesondere im Spinnbetrieb auftretende Kräfte zu kompensieren und den Spinnrotor in einer möglichst gleich bleibenden Position zu halten. Die Lagerung kann dabei aus einer Kombination aus einem Luftlager und einem Magnetlager oder aus einem mechanischen Anlaufelement und einem Magnetlager sein. Es ist auch möglich, dass eine Kombination aus einem Luftlager und einem Magnetlager gewählt wird und ein mechanisches Anlaufelement zusätzlich vorgesehen ist.

Vorteilhafterweise ist das axiale Stützlager ein im Spinnbetrieb weitgehend berührungsloses Lager. Hierdurch kann der Spinnrotor energiesparend betrieben werden.

Ganz besonders vorteilhaft ist es, wenn das axiale Stützlager ein aktives Lager ist. Das aktive Lager reguliert die Position des Spinnrotors, so dass bei einer Veränderung der Lage des Spinnrotors eine entsprechend verstärkte Kraft seitens des Stützlagers auf den Spinnrotor wirkt, um die Lage des Spinnrotors wieder auszugleichen. Der Spinnrotor kann hierbei in einer sehr stabilen Position gehalten werden. Auch ist es möglich verschiedene axiale Positionen des Spinnrotors zu definieren und einzuhalten.

In einer besonders bevorzugten Ausführung der Lagerung ist das axiale Stützlager ein aktives Lager. Das aktive Lager reguliert die Position des Spinnrotors derart, dass ein möglichst gleicher Abstand zum Stützlager eingehalten wird. Das Stützlager arbeitet dabei kontaktlos mit dem Spinnrotor zusammen. Durch elektrische Signale, welche die Position des Spinnrotors direkt oder indirekt ermitteln, wird das axiale Stützlager mehr oder weniger stark die IST-Position des Spinnrotors beeinflussen und versuchen, ihn in die SOLL-Position zu bringen. Befindet sich der Spinnrotor zu nah an dem kontaktlosen Stützlager, so wird die dem Stützlager zugeordnete Regulierung den Spinnrotor etwas weiter weg bewegen. Umgekehrt, falls der Spinnrotor zu weit von dem axialen Stützlager entfernt ist, wird die Regulierung den Spinnrotor wieder näher an das axiale Stützlager heran bewegen. Auf diese Weise wird ein verschleißfrei wirkendes, axiales Stützlager bei der Lagerung des Spinnrotors eingesetzt, welches die Position des Spinnrotors sehr genau bestimmen und einhalten kann. Das entsprechende Spinnenergebnis mit einem derart aktiv radial und axial gelagerten Spinnrotor ist sehr gleichmäßig und gut.

In einer Ausführung der Erfindung ist vorgesehen, dass zwei axiale Stützlager derart zueinander angeordnet sind, dass sie einander entgegen gerichtete Kräfte auf den Spinnrotor, insbesondere auf die Welle des Spinnrotors, erzeugen. Der Spinnrotor ist dabei zwischen den beiden axialen Stützlagern berührungslos eingespannt. Vorzugsweise sind diese beiden axialen Stützlager - oder zumindest eines davon - ebenfalls aktive Lager.

In einer bevorzugten Ausführung der Erfindung weist das an sich berührungslos arbeitende, axiale Stützlager ein als mechanischer Anschlag für die Welle wirkendes Anlaufelement auf, welches als Notlauflager dient. In dem Fall, dass eine große Kraft auf dem Spinnrotor wirkt, welche das berührungslos arbeitende, axiale Stützlager nicht abstützen kann, ist der mechanische Anschlag für die Welle vorgesehen. Das Anlaufelement kann verschleißfest ausgeführt sein, damit es durch das Anlaufen der Welle möglichst nicht beschädigt wird. Es kann auch als ein besonders effektiver Reibpartner für das Material der Welle des Spinnrotors ausgeführt sein, so dass ein allmähliches Auslaufen eines sich noch drehenden Spinnrotors beim Stoppen des Spinnrotors ermöglicht wird. Alternativ kann auch eine hohe Reibung durch das Anlaufelement auf den Spinnrotor bewirkt werden, wodurch ein Abbremsen des Spinnrotors beim Kontaktieren des Anlaufelements möglichst schnell erfolgt. Insbesondere wenn bei Ausfall der Radiallager und des berührungslosen axialen Stützlagers der Spinnrotor sicher abzubremsen ist, ist es vorteilhaft, wenn die Lagerung derart ausgeführt ist, dass sich der Spinnrotor in Richtung auf das Anlaufelement hin bewegt. Der Spinnrotor wird dabei in eine definierte Position bewegt und durch den Kontakt mit dem Anlaufelement gezielt abgebremst.

Eine der bevorzugten Ausführungen des Stützlagers besteht darin, dass es als statisches Luftlager ausgebildet ist, das den Spinnrotor, insbesondere dessen Welle, axial abstützt, indem ein Luftpolster zwischen dem Spinnrotor, insbesondere dem Wellenende und dem Luftlager aufgebaut wird. Durch einen permanenten Luftstrom, welcher gegen den Spinnrotor strömt, wird die axiale Abstützung des Spinnrotors bewirkt. Indem der Luftstrom variiert wird, kann die Position des Spinnrotors in axialer Richtung verändert werden bzw. bei unterschiedlich starken externen Kräften auf den Spinnrotor so reguliert werden, dass der Spinnrotor seine Position weitgehend stabil einhält.

Ist das Stützlager als ein Magnetlager ausgebildet, so ist in ganz besonders vorteilhafter Weise eine Ausführung der Erfindung geschaffen, welche in der Lage ist Zug- und/oder Druckkräfte auf den Spinnrotor auszuüben. Das Magnetlager, welches elektrisch angesteuert werden kann, kann unterschiedliche externe Kräfte ausgleichen, indem es die Zug- und/oder Druckkraft auf den Spinnrotor variiert. Mit einem entsprechenden Magnetlager ist die Regelung der Position des Spinnrotors sehr genau einstellbar. Der Spinnrotor kann somit seine Aufgabe der Erzeugung eines hervorragenden Garnes sehr gut gerecht werden.

Ganz besonders vorteilhaft ist es, wenn das Stützlager ein aktives Magnetlager ist, das eine elektrische Spule aufweist, welche dem Spinnrotor, insbesondere der Welle oder dem Wellenende derart zugeordnet ist, dass wahlweise Zug- und/oder Druckkräfte auf den Spinnrotor aufgebracht werden können. Durch eine entsprechende Ansteuerung der elektrischen Spule wird eine mehr oder weniger große Kraft erzeugt, welche den Spinnrotor in der gewünschten Position hält. Von außen auf den Spinnrotor einwirkende Kräfte können hierdurch ausgeglichen werden. Mit einem aktiven Magnetlager ist die axiale Positionierung des Spinnrotors in ganz besonders vorteilhafter Weise zu erreichen.

Ist dem Magnetlager eine mit elektrischen Bauteilen bestückte Leiterplatte für die Steuerung des aktiven Magnetlagers zugeordnet, so ist eine kompakte Bauweise möglich. Die Lagereinheit für den Spinnrotor kann hierdurch sehr gut montiert und demontiert werden. Dies ist besonders wichtig, da derartige Einheiten bei Rotorspinnmaschinen sehr häufig vorkommen. Derzeit sind Spinnmaschinen mit 600 Spinnstellen am Markt erhältlich. Die einfache Austauschbarkeit der Lagerung, im Falle eines Defekts, ist daher wichtig, um die Produktivität der Spinnmaschine nicht zu sehr zu beeinträchtigen.

Ist ein Magnet an dem Wellenende des Spinnrotors angeordnet, wobei der Magnet mit der Spule des aktiven Magnetlagers zusammenwirkt, so ist eine bevorzugte Ausführung der Erfindung zu erhalten, welche einfach in ihrer Bauweise ist. Der Magnet kann einfach in die Welle eingebaut oder daran befestigt werden. Die Spule mit ihrer Steuerung dagegen kann in der Lagereinheit stationär angeordnet sein. Hierdurch ergibt sich wiederum eine besonders einfache, robuste und zuverlässige Bauweise.

Um den Magnetfluss optimal zu führen, ist es besonders vorteilhaft, wenn der Magnet an dem Wellenende des Spinnrotors von einem nicht magnetischen Material, insbesondere Aluminium oder Kunststoff, umgeben ist. Hierdurch ist eine Abgrenzung zu dem Material der Welle des Spinnrotors möglich. Das axiale Magnetlager kann hierdurch sehr effektiv und mit wenig Verlust arbeiten.

Vorzugsweise ist das Stützlager ein passives Magnetlager, wobei der Magnet des Magnetlagers an dem Halter, insbesondere an dem Anlaufelement angeordnet ist. Der Halter kann beispielsweise ein austauschbares oder auch einstellbares Bauteil sein, das in seiner Position gegenüber dem Ende der Welle verändert wird. Damit ist unter anderem auch die Kraft einstellbar, mit welcher der Magnet gegenüber dem Ende der Welle wirkt.

Ist in einer vorteilhaften Ausführung in dem Anlaufelement zumindest eine gegen das Ende der Welle des Spinnrotors gerichtete Öffnung angeordnet, so kann ein Luftpolster zwischen dem Spinnrotor, insbesondere dem Wellenende, und der Lagerung als statisches Luftlager aufgebaut werden.

Weist das mechanische Anlaufelement eine flächige oder eine punktförmige Kontaktstelle für das Wellenende des Spinnrotors auf, so kann in der Anlauf- oder Abbremsphase des Spinnrotors oder bei äußerer Krafteinwirkung auf den Spinnrotor eine Beschädigung des Spinnrotors oder des Lagers verhindert werden. Insbesondere bei einer flächigen Kontaktstelle ist es vorteilhaft, wenn ein geeigneter Reibpartner zu dem Material des Wellenendes verwendet wird. Ein solcher Reibpartner kann zum Beispiel Kohlenstoff oder ein Kunststoff, beispielsweise Polyimid sein. Bei einer punktförmigen Kontaktstelle bietet es sich an, dass eine Kugel oder eine kugelförmige Kontur gewählt wird. Die Kugel bzw. das mechanische Anlaufelement kann beispielsweise aus Stahl gefertigt sein. Es ist auch möglich die Kugel in einer bei Bedarf geschmierten Kalotte zu lagern, um bei einem häufigen Kontakt den Widerstand zu dem Wellenende möglichst niedrig zu halten.

Ein erfindungsgemäßer Spinnrotor ist zum Einsatz in einer oben beschriebenen Lagerung geeignet. Der Spinnrotor der Offenend-Spinneinrichtung weist dabei eine Welle und einen an der Welle angeordneten Magneten auf. Der Magnet ist vorzugsweise an dem Wellenende des Spinnrotors befestigt und in einer bevorzugten Ausführung von einem nicht magnetischen Material umgeben. Die Welle kann entweder fest in einem Antrieb für den Spinnrotor integriert sein. In diesem Falle ist der Topf des Spinnrotors lösbar mit der Welle verbunden. In einer anderen Ausführung ist es möglich, dass der Spinnrotor eine Welle mit einem fest daran angeordneten Topf aufweist. Vorteilhaft ist es jedenfalls, wenn ein einfaches Ausbauen des Spinnrotors aus der Lagerung möglich ist, wenn der Spinnrotor gewechselt werden soll. In beiden Fällen ist der entsprechende Magnet, welcher Teil des Magnetlagers der Lagerung ist, fest mit dem Spinnrotor verbunden. In eingebautem Zustand wirkt dieser Magnet schließlich mit einer in der Lagerung fest angeordneten Spule des aktiven Magnetlagers zusammen und bewirkt eine vorbestimmte Positionierung des Spinnrotors innerhalb der Lagerung bzw. Spinneinrichtung.

Das erfindungsgemäße Stützlager für einen Spinnrotor einer Offenend-Spinneinrichtung ist ein aktives, axial wirkendes Magnetlager, welches mit einem Spinnrotor zusammenwirkt. Das axial wirkende Magnetlager hält den Spinnrotor in einer axial vorgegebenen Position. Es ist zur Verwendung in einer Lagerung, wie sie zuvor beschrieben wurde, verwendbar. Insbesondere ist hierbei zu beachten, dass ein derartiges, erfindungsgemäßes Stützlager mit einem in einer bevorzugten Ausführung in einem Wellenende angeordneten Magneten, welcher ganz bevorzugt von einem nicht magnetischen Material umgeben ist, und wobei der Magnet mit einer stationär angeordneten Spule zusammenwirkt, auch in einer Lagerung verwendbar, welche andere als die zuvor beschriebenen Radiallager verwendet. Andere Radiallager können beispielsweise passive Radiallager sein. Sie können außer der beschriebenen magnetischen radialen Lagerung auch pneumatisch oder mechanisch, beispielsweise durch Stützscheiben oder ein Wälzlager erfolgen.

Weitere Vorteile der Erfindung sind in den nachfolgenden Ausführungsbeispielen beschrieben. Es zeigt:
- **Figur 1**: eine schematische Gesamtansicht eines Spinnrotors mit Antrieb und Lagerung,
- **Figur 2**: eine Schnittdarstellung eines Wellenendes eines Spinnrotors,
- **Figur 3**: eine aktive axiale Lagerung in Schnittdarstellung,
- **Figur 4**: eine Vorderansicht der Figur 3,
- **Figur 5**: ein Detail im Bereich Wellenende und elektromagnetischer Axiallagerung,
- **Figur 6**: ein Detail im Bereich Wellenende und pneumatischer Axiallagerung,
- **Figur 7**: ein Detail im Bereich Wellenende und pneumatischer Axiallagerung mit einem Permanentmagneten,
- **Figur 8**: ein Detail im Bereich Wellenende und mechanischem Anlaufelement mit einem Permanentmagneten und
- **Figur 9**: ein Detail im Bereich Wellenende und pneumatischer Axiallagerung mit einem Permanentmagneten in einer Kartusche.

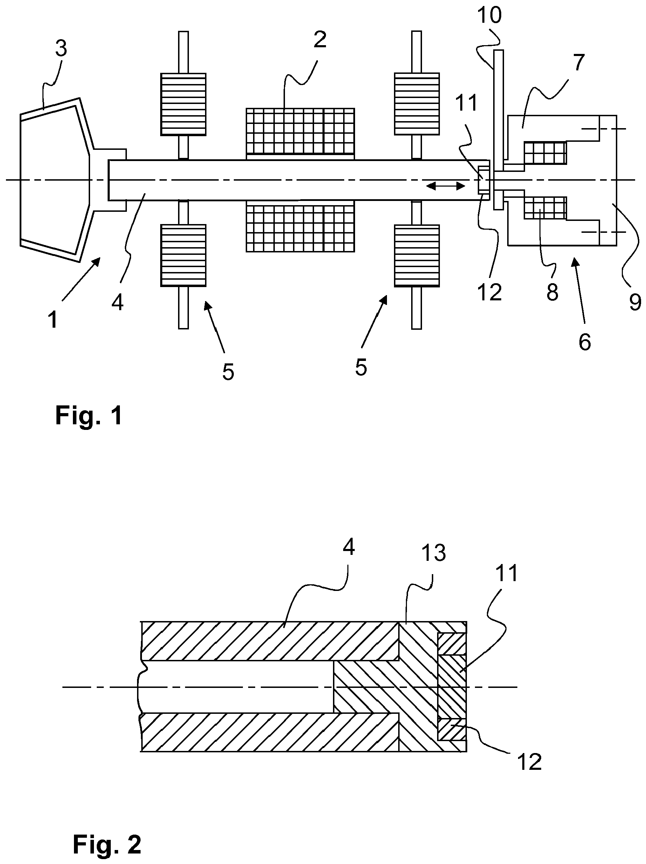

In Figur 1 ist eine schematische Darstellung eines Spinnrotors 1 mit einem Motor 2 als dessen Antrieb und ein axiales Stützlager 6 des Spinnrotors 1 dargestellt. Der Spinnrotor 1 weist einen Topf 3 auf, welcher mit einer Welle 4 verbunden ist. Die Verbindung zwischen Topf 3 und Welle 4 kann entweder fest, beispielsweise durch schweißen, pressen oder kleben erfolgen. Sie kann aber auch eine lösbare Verbindung darstellen, mit welcher der Topf 3 von der Welle 4 austauschbar gehalten ist. Die Welle 4 ist der sich drehende Rotor des Motors 2 und kann hierdurch in eine Drehbewegung versetzt werden. Es können auf diese Weise mehr als 200.000 Umdrehungen/min der Welle 4 und damit des Spinnrotors 1 erzeugt werden.

Die Lagerung des Spinnrotors 1 besteht in diesem Ausführungsbeispiel aus zwei aktiven radialen Lagerungen 5 und einem aktiven axialen Lager 6. Die aktiven Radiallager 5 lagern die Welle 4 in zwei Freiheitsgraden berührungslos zwischen Elektromagneten. Solange diese mit Energie versorgt sind, ist es möglich die Welle 4 berührungslos dazwischen zu positionieren. Obwohl die aktiven Radiallagerungen 5 durch ihre Bauweise auch eine gewisse axiale Führung der Welle 4 bewirken, ist dies in vielen Anwendungsfällen nicht ausreichend. Externe Kräfte, welche auf den Spinnrotor 1 einwirken können, wie beispielsweise der Unterdruck in dem Rotorgehäuse, das Einspeisen von Fasern oder das abrupte Unterbrechen der Fasereinspeisung oder auch Druckunterschiede bei den einzelnen Spinnphasen, können ein axiales Versetzen der Welle 4 bewirken. Um dies weitgehend zu vermeiden, ist das aktive axiale Lager 6 vorgesehen, das vorzugsweise an dem Ende der Welle 4, das dem Topf 3 gegenüberliegt, angeordnet ist.

Das aktive axiale Stützlager 6 umfasst einen Halter 7 zur Befestigung einer Spule 8 und eines Kerns 9 sowie einer Platine 10. Die Spule 8 umgibt den Kern 9 und ist über die auf der Platine 10 befindliche Steuerung angesteuert. Durch die Spule 8 werden elektromagnetische Kräfte erzeugt, welche über den Halter 7 auf die Welle 4 des Spinnrotors 1 einwirken. Diese elektromagnetischen Kräfte versuchen je nach Polung der an der Spule 8 anliegenden Spannung, die Welle 4 abzustoßen oder anzuziehen. Mit einem Magnet 11, welcher am Ende der Welle 4 an dem Spinnrotor 1 angeordnet ist und welcher mit dem Kern 9 zusammenwirkt, wird eine Anziehungskraft erzeugt, welche die Abstoßung der elektromagnetischen Kräfte kompensiert oder die Anziehung durch die elektromagnetischen Kräfte verstärkt. Die Steuerung auf der Platine 10 bewirkt hierbei, dass der Abstand zwischen dem axialen Stützlager 6 und dem Wellenende weitgehend gleich bleibt, indem die Abstoßung der Welle 4 mehr oder weniger stark erfolgt. Um Wechselwirkungen zwischen der Anziehung und Abstoßung weitgehend zu vermeiden, ist zwischen dem magnetisierbaren Material der Welle 4 an deren Ende und dem Magneten 11 ein nicht magnetisches Material 12, beispielsweise Aluminium, angeordnet.

In Figur 2 ist das Ende der Welle 4 des Spinnrotors 1 in einen Längsschnitt dargestellt. Die Welle 4 wird ist als Hohlwelle ausgebildet, in welcher ein Magnethalter 13 mit einem Fortsatz steckt und befestigt ist. Der Magnethalter 13 trägt den Magneten 11. Das nicht magnetische Material 12, beispielsweise Aluminium, umgibt den Magneten 11 ringförmig und ist ebenfalls in dem Magnethalter 13 aufgenommen.

In einem anderen Ausführungsbeispiel können der Magnet 11 und das nicht magnetische Material 12 auch direkt in der Welle 4 aufgenommen sein. Aus fertigungstechnischen Gründen und zur variablen Gestaltung des Wellenendes 4, bietet sich die Verwendung eines entsprechenden Magnethalters 13 an. Je nachdem, welches axiale Lager der Welle 4 gegenübersteht, kann anstelle eines Magneten 11 oder auch zusätzlich zu dem Magneten 11 auch ein geeigneter Reibpartner für ein Luftlager an dieser Stelle eingesetzt sein. Ein solches Luftlager wird beispielsweise seit längerem unter dem Namen Aerolager von der Firma Rieter angeboten. So kann zum Beispiel das geregelte Luftlager die Druckkraft auf das Wellenende aufbringen und der Magnet die der Druckkraft entgegenwirkende Zugkraft.

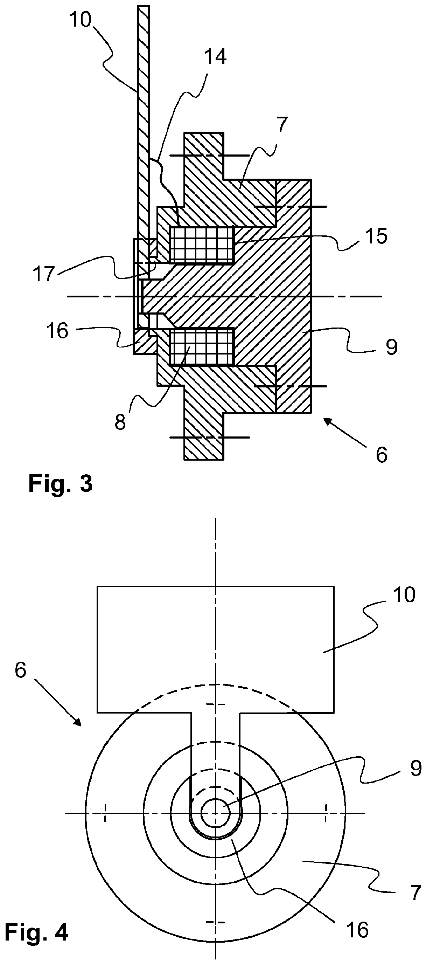

In Figur 3 ist ein Schnitt durch ein aktives Magnetlager als axiales Stützlager 6 dargestellt. Das axiale Stützlager 6 ist im Wesentlichen in dem Halter 7 aufgenommen. Der Halter 7 dient darüber hinaus dazu, dass das axiale Stützlager 6 in einem nicht dargestellten Träger der Spinneinrichtung befestigt werden kann. Der Halter 7 ist topfförmig ausgebildet. In dem Halter 7 ist der Kern 9 angeordnet, der mit dem Halter 7 verbunden ist. Der Kern 9 weist abgestufte Verjüngungen auf, wobei eine dieser Verjüngungen von der Spule 8 umgeben ist. Zwischen der Spule 8 und dem Kern 9 befindet sich eine Isolation 15. Die Spule 8 ist mit einer elektrischen Leitung 14 mit der Steuerungsplatine 10 verbunden und kann entsprechend angesteuert werden, um eine Druckkraft auf die Welle 4 ausüben zu können. Hierdurch wird der Abstand des Magneten 11 bzw. des Spinnrotors 1 von dem stationären axialen Lager 6 konstant bzw. in einem definierten Abstand gehalten.

Der Platine 10 ist ein Abstandssensor angeordnet, welcher den Abstand zwischen dem Spinnrotor 1 und dem axialen Stützlager 6 misst. Je nach Signal dieses Sensors wird die Spule 8 mit mehr oder weniger Strom bzw. wechselnder Spannung beaufschlagt, um eine mehr oder weniger starke Druckkraft oder Zugkraft auf den Spinnrotor 1 ausüben zu können und diesen hierdurch entgegen oder zusätzlich zu der Magnetkraft in die gewünschte Position bringen zu können. Durch die Anordnung der Platine 10 an dem Kern 9 wird eine kompakte Bauweise erzielt, welche sowohl die Steuerung als auch den Sensor als Baueinheit mit der axialen Lagerung 6 aufnimmt.

An dem Halter 7 ist unmittelbar gegenüber dem Spinnrotor 1 ein Anlaufelement 16 angeordnet. Dieses Anlaufelement 16 ist ein günstiger Reibpartner zu dem Wellenende des Spinnrotors 1 und bewirkt für den Fall, dass das axiale Lager 6 ausfällt, dass der Spinnrotor 1 ohne Beschädigung des axialen Lagers 6 und in vorbestimmter Weise gestoppt wird, ohne dass auch das dem Spinnrotor 1 zugeordnete radiale Lager 5 beschädigt wird. Das Anlaufelement 16 kann beispielsweise aus Keramik hergestellt sein, um die axiale Lagerung 6 bei einer Kollision mit dem Spinnrotor 1 zu schützen. Anlaufelement 16 kann aber auch beispielsweise als ein Kohleelement ausgeführt oder aus Kunststoff sein, um ein störungsfreies Gleiten solange zu gewährleisten, bis der Spinnrotor 1 gestoppt ist.

In Figur 4 ist zur besseren Verdeutlichung noch eine Vorderansicht des axialen Lagers 6 dargestellt. Es ist daraus ersichtlich, dass die Platine 10 dem axialen Lager 6 zugeordnet ist. Das Anlaufelement 16 ist im Bereich der Platine 8 ausgeschnitten, um eine Kollision des Spinnrotors 1 mit der Platine 10 zu vermeiden. An dem Halter 7 sind Befestigungen angedeutet, über welche das axiale Stützlager 6 an der Spinneinheit befestigt werden kann.

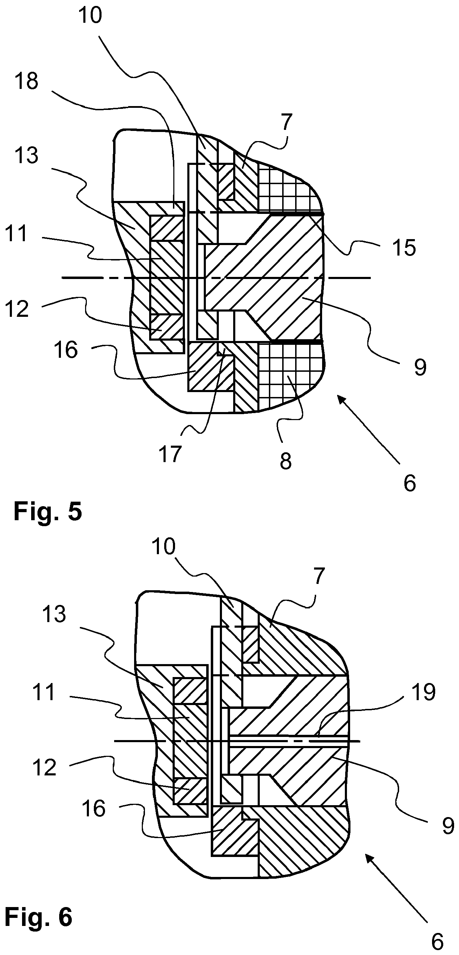

Zur besseren Darstellung der Bauweise des axialen Stützlagers 6 ist in Figur 5 nochmals eine vergrößerte Darstellung des Zusammenwirkens zwischen dem Ende der Welle 4 bzw. dem Magnethalter 13 und der dem Ende der Welle 4 zugewandten Seite der Lagerung 6 dargestellt. Dabei ist ersichtlich, dass der Magnet 11 dem verjüngten Kern 9 gegenübersteht. Der Kern 9 besteht aus magnetisierbarem Material. Der Magnet 11 versucht den Kern 9 anzuziehen. Dagegen wirkt die Spule 8 auf den Spinnrotor 1, insbesondere über einen Kragen 17 des Halters 7 auf den ringförmigen Rand 18 des Spinnrotors 1 und versucht diesen abzustoßen. Durch eine Veränderung der Abstoßkraft mit Hilfe veränderter Stromzufuhr an die Spule, wird die Anzugskraft des Magneten 11 mehr oder weniger überwunden und der Spinnrotor 1 im Gleichgewicht gehalten. Der Magnet 11 zieht also den Spinnrotor 1 an den Kern 9, während die Spule 8 bei einer entsprechenden Beaufschlagung mit Strom versucht den Spinnrotor 1 weg zu drücken. Durch das Zusammenspiel zwischen der Zugkraft des Magneten 11 und der Druckkraft der Spule 8 wird der Spinnrotor 1 in einem Gleichgewicht und einem vorgesehenen Abstand zu der Lagerung 6 gehalten. Andererseits kann es durch die auf den Spinnrotor 1 einwirkenden Kräfte auch erforderlich sein, dass die Magnetkraft verstärkt werden muss, um den Spinnrotor 1 in der gewünschten Position zu halten. In diesem Fall wird durch eine Umkehrung der Polung der auf die Spule 8 einwirkenden Spannung bewirkt, dass der Spinnrotor 1 zusätzlich zur Magnetkraft in deren Richtung gezogen wird. Durch die Isolation 15 wird sichergestellt, dass bei einer Bestromung der Spule 8 die elektromagnetischen Wellen über den Halter 7 bzw. den Kragen 17 mit dem ringförmigen Rand 18 des Magnethalters 13 zusammenwirken.

Um ein kontrolliertes Anlaufen des Spinnrotors 1 an das axiale Stützlager 6 zu gewährleisten, ist zwischen dem Kragen 17 und dem ringförmigen Rand 18 das Anlaufelement 16 angeordnet.

Wenn die Stromversorgung der Spule 8 ausfällt, wird die Welle 4 über den Permanentmagneten 11 in Richtung zum Kern 9 gezogen und kontaktiert das Anlaufelement 16. Das Anlaufelement 16 steht etwas über die Platine 10 über, so dass der Spinnrotor 1 die Platine 10 nicht berühren und beschädigen kann.

Anstelle des hier dargestellten elektromagnetisch wirkenden axialen Stützlager 6 mit einer elektromagnetischen Spule 8 kann anstelle dieser elektromagnetischen Spule 8 auch ein Luftlager vorhanden sein. Hierbei würde einerseits der Spinnrotor 1 durch den Magneten 11 und den Kern 9 an das axiale Lager 6 angezogen werden. Anstelle der Spule 8 sind in diesem Ausführungsbeispiel, insbesondere zentral in dem Kern 9, eine oder mehrere Luftöffnungen 19 vorhanden, welche Druckluft gegen das Ende der Welle 4 des Spinnrotors 1 leiten. Durch einen mehr oder weniger starken Luftstrom, welcher gegen die Welle 4 drückt, wird eine Abstoßkraft erzeugt, welche die Anzugskraft des Magneten 11 überwindet. Durch eine Regulierung dieses Luftstroms ist der Spinnrotor 1, in gleicher Weise wie mit der elektromagnetischen Spule 8, im Gleichgewicht zu halten. Dies ist schematisch in Figur 6 dargestellt. Die Änderung der Druckluft kann durch ein steuerbares Ventil erzielt werden.

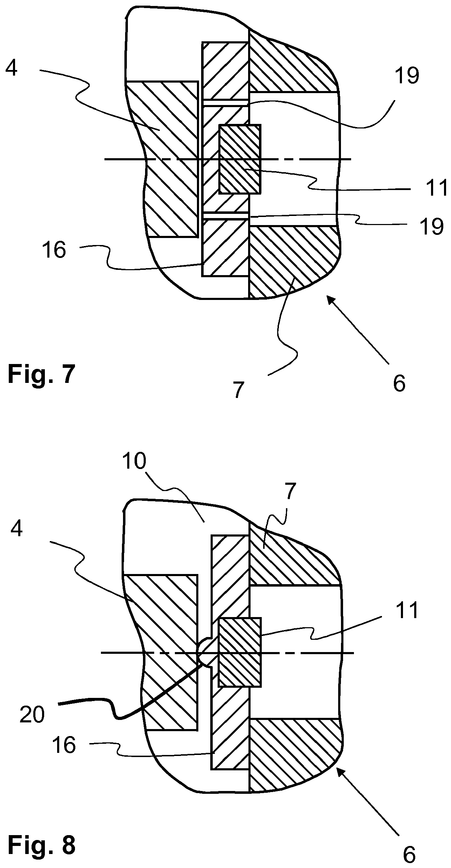

Figur 7 zeigt ein solches Detail im Bereich Wellenende und pneumatischer Axiallagerung mit einem Permanentmagneten 11. Hierbei ist anders als zuvor beschrieben der Permanentmagnet 11 nicht an der Welle 4 angeordnet, sondern an dem Halter 7. Der Magnet 11 befindet sich dabei in dem Anlaufelement 16 und ist von diesem in Richtung der Welle 4 abgedeckt. Dennoch wirkt seine Magnetkraft weiterhin auf die aus einem ferromagnetischen Werkstoff hergestellte Welle 4 und zieht diese an. Das Anlaufelement 16 besteht aus einem Werkstoff, welcher eine gute Gleitpaarung mit dem Wellenende ergibt. So kann das Anlaufelement 16 beispielsweise aus Kohlenstoff oder aus einem Kunststoff, wie beispielsweise Polyimid hergestellt sein, wenn das Wellenende aus Stahl hergestellt ist. Wenn die Welle 4 gegen das Anlaufelement 16 anläuft, gleiten die beiden Teile aufeinander, ohne dass es zu starkem Verschleiß kommt. Ein Austausch des Anlaufelementes 16 wird daher eher selten erforderlich sein. Auch sind die Reibungsverluste gering, so dass der Energieverbrauch, insbesondere beim Anlauf des Spinnrotors, gering ist.

In dem Anlaufelement 16 sind Luftöffnungen 19 angeordnet. Sie umgeben beispielsweise den Permanentmagneten 11. Auf der dem Permanentmagneten 11 zugewandten Seite des Anlaufelements 16 liegt ein Überdruck an, so dass eine Luftströmung gegen das Wellenende gerichtet ist. Zusammen mit der Anziehungskraft des Magneten 11 ergibt sich durch die Abstoßungskraft der Luftströmung ein Gleichgewicht, das die Welle 4 in einem stabilen Zustand hält. Das Material des Anlaufelements 16 kann auch porös sein, so dass die Luft durch das Anlaufelement 16 hindurchdiffundiert.

Figur 8 zeigt ein weiteres alternatives Detail im Bereich Wellenende und mechanischem Anlaufelement 16 mit einem Permanentmagneten 11. Der Aufbau ist ähnlich wie bei Figur 7, allerdings ist das Anlaufelement 16 mit Luftöffungen 19 ersetzt durch ein Anlaufelement 16 mit einer zentralen Erhebung 20. Die Welle 4 kann sich an dieser Erhebung 20 bei Bedarf abstützen. Es ergibt sich eine punktförmige Anlaufstelle, die wenig reibungsbehaftet ist. Die Erhebung kann einteilig mit dem Anlaufelement 16 ausgebildet sein oder als separates Bauteil, beispielsweise als Kugel oder Kugelabschnitt in das Anlaufelement 16 eingesetzt sein. Als Material bietet sich hierfür Stahl oder Keramik an. Das Wellenende kann hierbei ebenfalls mit einem Keramikeinsatz verstärkt sein.

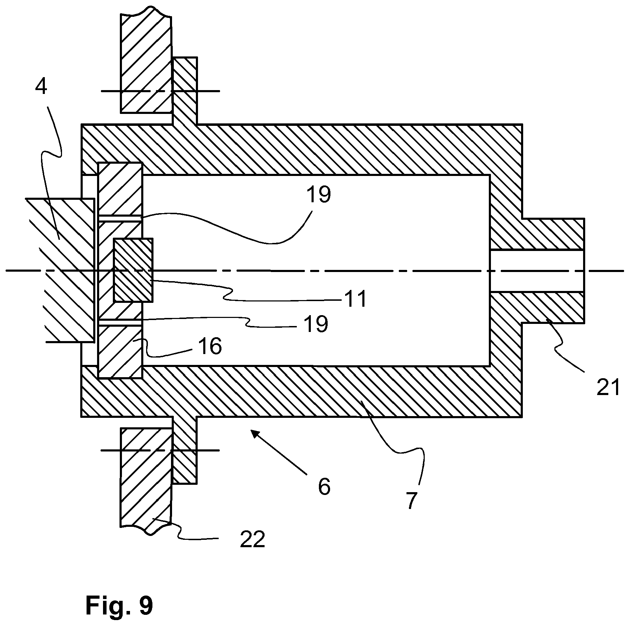

In Figur 9 ist eine Ausführung ähnlich der Ausführung gemäß Figur 7 dargestellt. Das Anlaufelement 16 und der Magnet 11 sind in einem austauschbaren Halter 7, der in Art einer Kartusche aufgebaut ist, angeordnet. Der Halter 7 weist einen Luftanschluss 21 auf, welcher an eine nicht dargestellte Überdruckleitung und eine Überdruckquelle angeschlossen werden kann. Hierdurch kann die Kartusche unter Druck gesetzt werden, um eine Strömung aus den Luftöffnungen 19 zu erzeugen, welche gegen die Kraft des Magneten 11 auf die Welle 4 wirkt. Der Halter 7 ist beispielsweise mittels Schrauben oder eines Gewindes an einem Gehäuse 22 der Spinnstelle befestigt. Die hier dargestellte Ausführung erleichtert die Herstellung und Montage des Axiallagers, da alle wichtigen Komponenten in einem Bauteil vereint sind. Selbstverständlich können auch die anderen Ausführungsbeispiele mittels einer solchen Kartusche aufgebaut sein.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spinnrotor
- 2: Motor
- 3: Topf
- 4: Welle
- 5: Radiallagerung
- 6: axiale Stützlagerung
- 7: Halter
- 8: Spule
- 9: Kern
- 10: Platine
- 11: Magnet
- 12: nicht magnetisches Material
- 13: Magnethalter
- 14: Leitung
- 15: Isolation
- 16: Anlaufelement
- 17: Kragen
- 18: Rand
- 19: Luftöffnung
- 20: Erhebung
- 21: Luftanschluss
- 22: Gehäuse

## Patentansprüche

1. Verfahren zur Lagerung eines einen Topf (3) und eine Welle (4) aufweisenden Spinnrotors (1) einer Offenend-Spinneinrichtung, mit zwei Radiallagern (5) und zumindest einem axialen Stützlager (6), **dadurch gekennzeichnet, dass** zumindest eines der Radiallager (5) aktiv magnetisch wirkt und der Spinnrotor (1) mittels des axialen Stützlagers (6) derart axial abgestützt wird, dass einerseits ein aerostatisches Luftlager und/oder ein mechanisches Anlaufelement (16) und andererseits ein Magnetlager vorgesehen ist, welche gegeneinander wirken.

2. Verfahren nach dem vorherigen Anspruch, **dadurch gekennzeichnet, dass** das axiale Stützlager (6) berührungslos und/oder aktiv wirkt.

3. Verfahren nach einem oder mehreren der vorherigen Ansprüche, **dadurch gekennzeichnet, dass** der Spinnrotor (1) am Wellenende und/oder in zumindest einem weiteren Bereich, insbesondere im Bereich des Radiallagers (5) oder des Topfes (3), axial abgestützt wird, wobei insbesondere zwei dieser axialen Abstützungen einander entgegen gerichtete Kräfte auf die Welle (4) erzeugen.

4. Verfahren nach einem oder mehreren der vorherigen Ansprüche, **dadurch gekennzeichnet, dass** das axiale Stützlager (6) Zug- und/oder Druckkräfte auf die Welle (4) ausübt, um von außen, insbesondere durch den Spinnbetrieb, auf die Welle (4) einwirkende Axialkräfte kompensieren zu können.

5. Verfahren nach einem oder mehreren der vorherigen Ansprüche, **dadurch gekennzeichnet, dass** der Abstand zwischen dem Stützlager (6) und einem Bezugspunkt auf dem Spinnrotor (1), insbesondere auf der Welle (4), gemessen und geregelt wird.

6. Lagerung eines einen Topf (3) und eine Welle (4) aufweisenden Spinnrotors (1) einer Offenend-Spinneinrichtung, welche zwei Radiallager (5) und zumindest ein axiales Stützlager (6) für den Spinnrotor (1) aufweist, **dadurch gekennzeichnet, dass** zumindest eines der Radiallager (5) aktiv magnetisch wirkt und dass das axiale Stützlager (6) einerseits ein aerostatisches Luftlager und/oder ein mechanisches, insbesondere eine flächige oder eine punktförmige Kontaktstelle für das Wellenende des Spinnrotors (1) bildendes, Anlaufelement (16) aufweist und andererseits ein Magnetlager aufweist, welche gegeneinander wirken.

7. Lagerung nach dem vorherigen Anspruch, **dadurch gekennzeichnet, dass** das axiale Stützlager (6) ein berührungsloses und/oder ein aktives Lager ist.

8. Lagerung nach einem oder mehreren der vorherigen Ansprüche, **dadurch gekennzeichnet, dass** zwei axiale Stützlager (6) derart zueinander angeordnet sind, dass sie einander entgegen gerichtete Kräfte auf den Spinnrotor (1), insbesondere die Welle (4), erzeugen.

9. Lagerung nach einem oder mehreren der vorherigen Ansprüche, **dadurch gekennzeichnet, dass** das Stützlager (6) ein statisches Luftlager ist, das den Spinnrotor (1), insbesondere die Welle (4), axial abstützt, indem ein Luftpolster zwischen dem Spinnrotor (1), insbesondere dem Wellenende, und dem Luftlager aufgebaut wird.

10. Lagerung nach einem oder mehreren der vorherigen Ansprüche, **dadurch gekennzeichnet, dass** das Stützlager (6) ein Magnetlager, insbesondere ein aktives Magnetlager, das eine elektrische Spule (8) aufweist, ist, welches derart dem Spinnrotor (1), insbesondere der Welle (4) oder dem Wellenende, derart zugeordnet ist, dass es wahlweise Zug- und/oder Druckkräfte auf den Spinnrotor (1) ausüben kann.

11. Lagerung nach einem oder mehreren der vorherigen Ansprüche, **dadurch gekennzeichnet, dass** dem Magnetlager eine mit elektrischen Bauteilen bestückte Leiterplatte (10) für die Steuerung des aktiven Magnetlagers zugeordnet ist.

12. Lagerung nach einem oder mehreren der vorherigen Ansprüche, **dadurch gekennzeichnet, dass** an dem Wellenende des Spinnrotors (1) ein Magnet (11) angeordnet ist, welcher mit der Spule (8) des aktiven Magnetlagers zusammenwirkt und vorzugsweise der Magnet (11) in dem Wellenende des Spinnrotors (1) von einem nicht magnetischen Material (12), insbesondere Aluminium oder Kunststoff, umgeben ist.

13. Lagerung nach einem oder mehreren der vorherigen Ansprüche, **dadurch gekennzeichnet, dass** das Stützlager (6) ein passives Magnetlager ist, wobei der Magnet (11) an dem Halter (7), insbesondere an dem Anlaufelement (16) angeordnet ist.

14. Lagerung nach einem oder mehreren der vorherigen Ansprüche, **dadurch gekennzeichnet, dass** in dem Anlaufelement (16) zumindest eine gegen das Ende der Welle (4) des Spinnrotors (1) gerichtete Öffnung (14) angeordnet ist, zum Aufbau eines Luftpolsters zwischen dem Spinnrotor (1), insbesondere dem Wellenende, und der Lagerung als statisches Luftlager.

15. Spinnrotor einer Offenend-Spinneinrichtung mit einer Welle und einem an der Welle (4) angeordneten Magneten (11) zur Verwendung in einer Lagerung mit den Merkmalen nach einem oder mehreren der vorherigen Ansprüche.

16. Stützlager für einen Spinnrotor einer Offenend-Spinneinrichtung mit einem aktiven axial wirkenden Magnetlager für die Welle (4), zur Verwendung in einer Lagerung mit den Merkmalen nach einem oder mehreren der vorherigen Ansprüche.
